# EUROPEAN PATENT SPECIFICATION

(11) **EP 3 696 631 B1**
(45) Date of publication and mention of the grant of the patent: **05.04.2023**
(21) Application number: 20153405.4
(22) Date of filing: 23.01.2020
(51) Int. Cl.: G05B 19/18, G05B 19/402

(54) **MACHINING CENTRE FOR MACHINING WOODEN PIECES, EQUIPPED WITH A MEASURING SYSTEM**
BEARBEITUNGSZENTRUM MIT EINEM MESSSYSTEM ZUR BEARBEITUNG VON HOLZSTÜCKEN
CENTRE D'USINAGE POUR DES PIÈCES EN BOIS ÉQUIPÉ D'UN SYSTÈME DE MESURE

(30) Priority: 13.02.2019 EP 19157015; 08.03.2019 IT 201900003411
(43) Date of publication of application: 19.08.2020
(73) Proprietor: SCM Group S.p.A., 47921 Rimini (RN) (IT)
(72) Inventor: MAZZA, Michele, 47921 RIMINI (RN) (IT)
(74) Representative: Tiburzi, Andrea

(56) References cited:
- EP-A1- 2 586 564
- EP-A1- 3 025 822
- DE-A1-102010 024 348

## Description

The invention relates to a machining centre, in particular for machining pieces made of wood, ceramic, plastic, glass, fibreglass and the like.

The invention also relates to a measuring system included in said machining centre.

The invention also relates to a method for operation of the machining centre comprising the measuring system.

More in detail, the invention relates to a numerical control machining centre for machining pieces made of wood, ceramic, plastic, glass, fibreglass and the like, equipped with bars for supporting pieces to be machined and suction cups coupled to the bars, for fixing the pieces on the bars. Said machining centre comprises a measuring system designed and manufactured in particular for measuring the position of the supporting bars and the suction cups coupled to them, but which can be used for any machining centre equipped with movable elements for supporting and fixing the pieces to be machined, for which it is necessary to measure the position of the movable elements inside the machining centre.

The description below relates to a numerical control machining centre equipped with supporting bars and suction cups coupled with them with manual movement, for machining wooden panels, but it is quite apparent how the same should not be considered limited to this specific use.

There are prior art machining centres which carry out milling and drilling mainly on wood and on materials with similar physical characteristics.

Said machining centres comprise a work surface, on which the pieces to be machined are fixed, and one or more operating units equipped with a machining unit, which can have up to 5 interpolating axes.

Said machining centres are equipped with automatic tool holders and systems for changing the tools, thereby rendering the process for machining the pieces fully automatic.

The work surface comprises a plurality of bars, on which are slidably coupled suction cups or clamps designed to fix the pieces being machined.

Said bars are equipped with channels for supply the vacuum, which is necessary to block the pieces on the suction cups.

Up to six suction cups, which can be removed and then freely repositioned, on the basis of the machining to be performed on the piece to be machined, can be mounted on each bar of a surface with manual bars.

As is currently well known, in said manual machining centres, the bars and the suction cups are positioned manually along the base of the machining centre.

For this reason, an operator must exactly position the bars and the suction cups on the bars in order to perform the requested machining.

The operator does not therefore receive any information on the correctness of the positioning of the bars and suction cups, which results in considerable risks of incorrect positioning.

There are also prior art semiautomatic machining centres, in which the positioning of the movable elements, that is to say, the bars and suction cups, occurs manually, with the support of linear measuring systems such as magnetic or magnetostrictive lines coupled with the movable elements, to provide a feedback on the positioning performed by the operator manually.

However, these machining centres have the drawback of having a significant and bulky wiring for operation of the measurement systems.

There are also automatic machining centres, in which the bars are motordriven by means of a motor and slide on a rack, whilst the suction cups are moved by means of a carriage which slides on a belt, which couples one suction cup at a time and positions it, or by means of a motor which slides on a rack, so that the configuration necessary for the machining occurs automatically.

The drawback of these fully automatic machining centres is the high cost and the large overall dimensions of the motors and the carriages which move the movable elements.

The relevant prior art includes also the patent applications EP 2586564 A1 and EP 3025822 A1.

In light of the above, the aim of the invention is therefore to provide a manual machining centre in which the movement of the movable elements is simple and reliable.

A further aim of the invention is to provide a machining centre in which an operator has a feedback during the positioning of the movable elements on the work surface, with reduced costs.

The specific object of this invention is therefore a machining centre as defined in claim 1.

Preferred embodiments are defined in the dependent claims.

The invention is now described, by way of example and without limiting the scope of the invention, with reference to the accompanying drawings which illustrate preferred embodiments of it, in which:

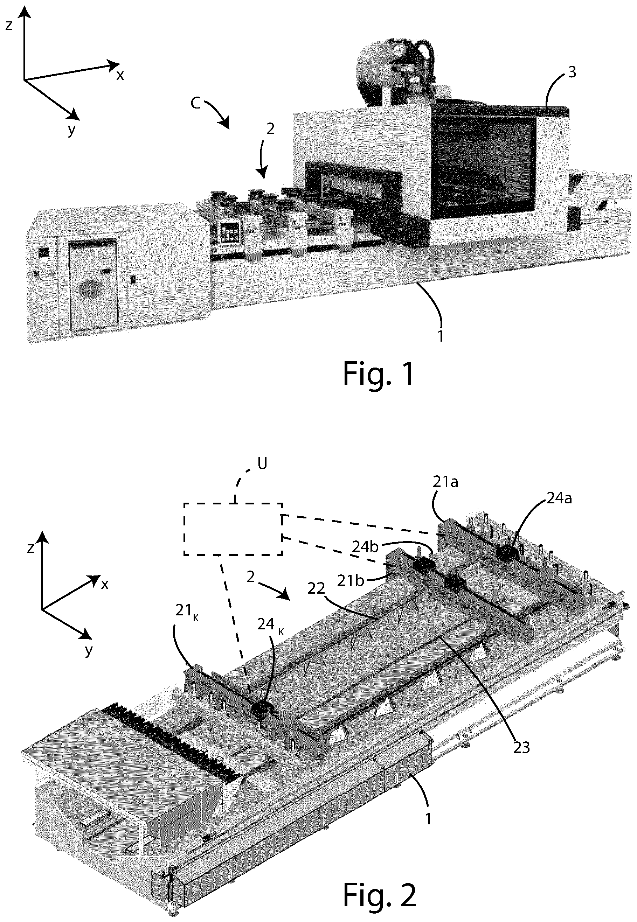

Figure 1 is a perspective side view of the machining centre equipped with a measuring system according to the invention;
Figure 2 is a perspective side view of the base and of the work surface of the machining centre according to the invention;

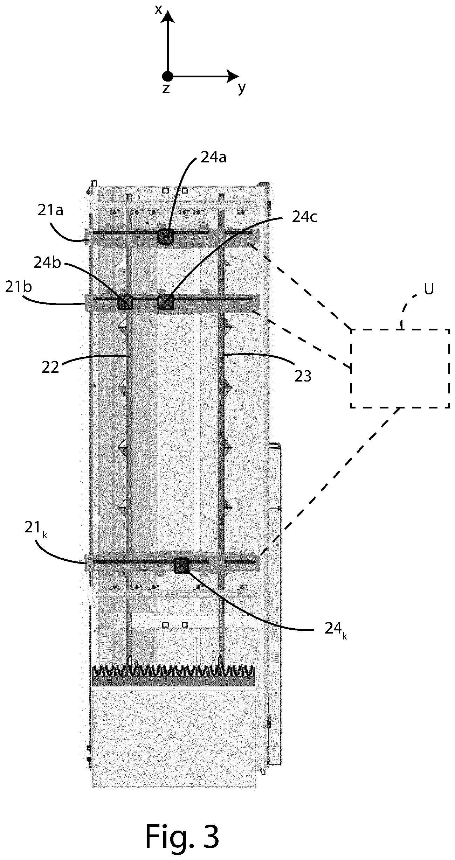

Figure 3 is a top view of the base and of the work surface shown in Figure 2;
Figure 4 is a top view of a portion of the base and of the work surface shown in Figure 2; and
Figure 5 is a perspective side view of the portion of the base and of the work surface shown in Figure 4.

The similar parts will be indicated in the various drawings with the same numerical references.

With reference to the accompanying drawings, the machining centre C for machining pieces made of wood, ceramic, plastic, glass, fibreglass and the like, according to the invention, basically comprises a base 1, by means of which said machining centre C rests on the ground, a work surface 2, for supporting pieces to be machined, a working unit 3, equipped with tools for machining the pieces, a logic control unit U and a measuring system 4.

Said base 1 has an elongate shape, the main dimension of which extends mainly along a direction of extension parallel to the axis indicated with reference X.

Said work surface 2 is coupled to said base 1 and also has an elongate shape, the main dimension of which extends mainly along a direction of extension parallel to the axis X .

Said work surface 2 comprises a plurality of supporting bars 21_{a,b,...k,...n} which are coupled in a slidable fashion with said base 1 by means of a first 22 and a second 23 guide, integral with said base 1.

Said plurality of supporting bars 21_{a,b,...k,...n} can be actuated manually, along said first 22 and second 23 guide of said base 1, according to the X axis.

Each supporting bar 21ₖ di of said plurality of supporting bars 21_{a,b,...k,...n} is positioned aligned along a direction parallel to an axis at right angles to the axis X, indicated with the reference Y.

Said plurality of supporting bars 21_{a,b,...k,...n} is designed to support the piece to be machined.

On each supporting bar 21ₖ is slidably mounted a plurality of movable elements 24_{a,b,...k,...n} with suction cups or clamps, for blocking the pieces to be machined, by means of vacuum systems, during the machining of the piece by said working unit 3.

Said plurality of movable elements 24_{a,b,...k,...n} can be actuated manually, along respective bars of said plurality of supporting bars 21_{a,b,...k,...n}, along the axis Y.

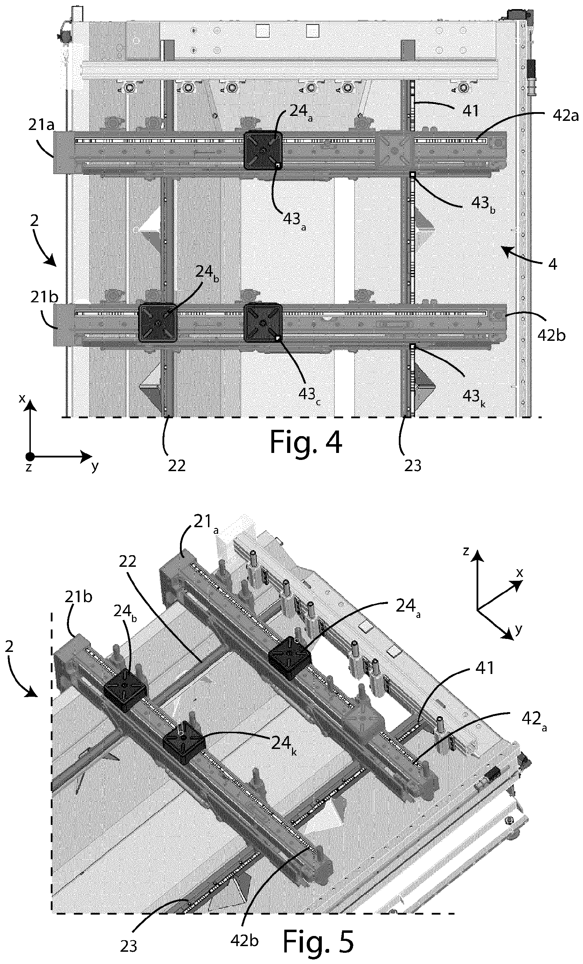

With reference in particular to Figures 4 and 5, said measuring system 4 comprises a first code 41, a plurality of second codes 42_{a,b,...k,...n} and a plurality of optical sensors 43_{a,b,...k,...n} such as *encoders* or optical readers which are able to decode said codes.

In particular, said first code 41 is of a binary type, has a longitudinal extension along said axis X from a first end 41ₐ, also called zero point or reference point, to a second end 41_{b} and is positioned along all or along part of said first 22 or second 23 guide.

Without departing from the scope of the invention, said first code can be positioned anywhere on said base 1, in a direction parallel to the axis X, between a side end of the base and the opposite end, ends included.

Said first code 41 comprises a plurality of signs, suitably combined, in order to contain coded information.

A main information coded in said code 41 is the distance expressed in millimetres between each supporting bar 21ₖ and the zero point 41ₐ of said code 41.

In particular, said first binary code 41 is formed by 2ⁿ bits or signs where the n-tuple n uniquely defines the position of each supporting bar 21ₖ along said first code 41.

As a bit corresponds to an interval of 1 mm, different useful lengths of code can be obtained.

In particular, by using an n-tuple of 15 it is possible to have a code formed by 2¹⁵ bits which is 32.768 mm long, whilst by using a n-tuple of 17 it is possible to have a code formed by 2¹⁷ bits which is 13.1072 mm long.

For this reason, said first code 41 is used for mainly identifying the exact position, expressed in millimetres, of each supporting bar 21ₖ along said base 1, with respect to the first end 41ₐ of said code 41, as described in detail below.

Each code 42ₖ of said plurality of second codes 42_{a,b,...k,...n} is positioned on a respective supporting bar 21ₖ and has the same structure as said first code 41, therefore having a first end 42' and a second end 42".

Similarly, each second code 42ₖ is used for mainly identifying the exact position of each movable element 24ₖ along the respective supporting bar 21k on which the movable element 24ₖ, is mounted, as described in detail below.

Each sensor 43ₖ of said plurality of sensors 43_{a,b,...,k,...n} is installed on corresponding supporting bars 21ₖ and on movable elements 24ₖ.

In this way, each supporting bar 2ₖ of said plurality di supporting bars 21_{a,b,...,k,...n} is equipped with at least one sensor 43ₖ which is able to read said first code 41.

Similarly, each movable element 24ₖ of said plurality of movable elements 24_{a,b,...,k,...n}, mounted on a respective supporting bar 21ₖ, is equipped with at least one sensor 43ₖ which is able to read the second code 42ₖ positioned on the predetermined supporting bar 21ₖ.

Each second code 42ₖ of said plurality of second codes 42_{a,b,...,k,...n} is equal to the other codes, so each supporting bar 21ₖ is equipped with a second code 42ₖ equal to the code 42ₖ₊₁ positioned, for example, on the next supporting bar 21ₖ₊₁.

In that case, an identification code is also installed on each supporting bar 21ₖ which is characteristic of that particular supporting bar.

For example, the bar 21ₐ may be provided with a second code 42ₐ having a n-tuple of 11 which allows the coding of 2¹¹ positions of the movable elements 24_{a,b,c,d} from 0 mm to 2048 mm.

Subsequently, the supporting bar 21_{b} will be provided with a second code 42_{b}, identical to the code 42ₐ, having a n-tuple of 11 which allows the coding of 2¹¹ positions of the movable elements 24_{e,f,g,h}, again from 0 mm to 2048 mm and so on.

In this case, each supporting bar 21ₖ will have a relative specific identification code, in such a way that each movable element 24ₖ can recognise the supporting bar 21ₖ on which it is mounted.

Without departing from the scope of the invention, it is possible, on the other hand, to use second codes 42ₖ which are all different from each other and positioned on the plurality of supporting bars 21_{a,b,...,k,...n} consecutive to each other, using n-tuples of 15 to be able to decode 2¹⁵ positions from 0 to 32.768 mm.

For example, the supporting bar 21ₐ may be provided with a second code 42ₐ having a n-tuple of 15 which allows the coding of 2¹⁵ positions of the movable elements 24_{a,b,c,d} from 0 mm to 2000 mm, corresponding to the total length of 32.768 mm.

Subsequently, the supporting bar 21_{b} will be provided with a second code 42_{b}, having a n-tuple of 15 which allows the coding of 2¹⁵ positions of the movable elements 24_{e,f,g,h}, again from 2001 mm to 4000 mm and so on.

Said plurality of sensors 43_{a,b,...,k,...n} can also comprise further sensors to improve the reading of the codes, for the energy saving, and for similar functions.

Said logic control unit U memorises the configurations of the work surface 2 necessary to carry out the machining on the pieces to be machined and actuates the components of the machining centre C on the basis of the various machining operations to be performed.

The "expression configurations of the work surface 2" means the exact arrangement of said plurality of supporting bars 21_{a,b,...,k,...n} along said base 1 and the exact arrangement of said plurality of movable elements 24_{a,b,...,k,...n} along the respective supporting bars 21_{a,b,...,k,...n}.

Each supporting bar 21ₖ and each movable element 24ₖ also comprise display means for providing visual information to the operator regarding their correct movement.

Moreover, the machining centre C is also equipped with a system for cleaning said first 41 and plurality 42_{a,b,...,k,...n} of second codes, such as brushes or bristles mounted, for example, on the movable elements 24_{a,b,...,k,...n} and on the supporting bars 21_{a,b,...,k,...n}.

The operation of the machining centre C for machining wooden pieces, equipped with a measuring system 4 described above is carried out as follows.

When an operator must perform the manual movement of said plurality of supporting bars 21_{a,b,...,k,...n} along said base 1 and of said plurality of movable elements 24_{a,b,...,k,...n} along the respective supporting bars 21_{a,b,...,k,...n} to which they are coupled, to move said work surface 2 to a predetermined work configuration, the operator requires a unique and precise reference system.

Each sensor 43ₖ positioned on each supporting bar 21ₖ detects an image of the portion of said first code 41 at which it is found.

The combination of signs taken in the image corresponds, as described above, to a numerical value of the distance of each supporting bar 21ₖ with respect to the first end 41ₐ of said first code 41 and said numerical value is sent to said logic control unit U.

Similarly, each sensor 43ₖ positioned on each movable element 24ₖ detects an image of the portion of each second code 42ₖ associated with a predetermined supporting bar 21ₖ.

The combination of signs taken in the image corresponds, as described above, to a numerical value of the distance of each movable element 24ₖ with respect to the first end 42'ₖ of said second code 42ₖ and said numerical value is sent to said logic control unit U.

In order to optimise the step for detection of the images of the codes, redundant information are added for each image of portion of code detected, in order to ensure the correct detection even if the codes 41 and 42_{a,b,...,k,...n} are soiled or fragmented.

Moreover, each sensor 43ₖ positioned on each movable element 24ₖ also reads the identification code of the supporting bar 21ₖ to which the sensor 43ₖ, is coupled only if all the second codes 42ₖ of said plurality of second codes 24_{a,b,...,k,...n} are equal to each other.

Said logic control unit U compares the distance values received with a predetermined configuration and sends to said display means feedback signals for the operator concerning the correct, or incorrect, positioning, of the supporting bars 21_{a,b,...,k,...n} and of the movable elements 24_{a,b,...,k,...n}.

In particular, said logic control unit U sends the position values relating to a given configuration both to said supporting bars 21_{a,b,...,k,...n} and to said movable elements 24_{a,b,...,k,...n}.

Said supporting bars 21_{a,b,...,k,...n} and movable elements 24_{a,b,...,k,...n} calculate the destination position and send related information to the operator by displaying means, so that the operator knows in which positions said supporting bars 21_{a,b,...,k,...n} and movable elements 24_{a,b,...,k,...n} must be moved.

At the same time, said supporting bars 21_{a,b,...,k,...n} and movable elements 24_{a,b,...,k,...n} send said destination position to said logic control unit U.

Said logic control unit U and said plurality of supporting bars 21_{a,b,...,k,...n} communicate with each other by means of a wireless protocol, in particular Bluetooth, Bluetooth low energy, or Wi-Fi, or by means of a cable connection.

Similarly, said logic control unit U and said plurality of movable elements 24_{a,b,...,k,...n} communicate with each other by means of a wireless protocol, in particular Bluetooth, Bluetooth low energy, or Wi-Fi, or by means of a cable connection.

Lastly, said plurality of supporting bars 21_{a,b,...,k,...n} and plurality of movable elements 24_{a,b,...,k,...n also} communicate with each other by means of a wireless protocol, in particular Bluetooth, Bluetooth low energy, or Wi-Fi, or by means of a cable connection.

Said measuring system 4 may be used on a plurality of machining centres, in those cases in which it is necessary to use several machining centres to perform a particular machining operation.

As is apparent from the above description, the machining centre for machining wooden pieces, equipped with a measuring system, according to the invention, allows the exact manual positioning of all the elements which make up the work surface, using a measuring system which is simple, efficient and with limited costs.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A machining centre (C) for machining pieces made of wood, ceramic, plastic, glass, fibreglass, comprising:
- a base (1) for supporting said machining centre (C);
- a work surface (2), coupled with said base (1), for supporting pieces to be machined, comprising in turn
- a plurality of supporting bars (21_{a,b,...,k,...n}), slidably coupled and movable along said base (1);
- a plurality of movable elements (24_{a,b,...,k,...n}) for fixing said pieces to be machined, slidably coupled and movable along respective supporting bars (21_{a,b,...,k,...n});
- a logic control unit (U) for the operation of said machining centre (C), in which are stored configurations of said work surface(2) for machining said pieces; said machining centre (C) being **characterised**
**in that** it comprises a measuring system (4) coupled to said work surface (2) which is able to measure position values of said plurality of supporting bars (21_{a,b,...,k,...n}) and of said plurality of movable elements (24_{a,b,...,k,...n}) in a predetermined configuration of said work surface (2) and send said position values to said logic control unit (U),
**in that** said logic control unit (U) makes a comparison between said configurations stored and said position values receives and emits signals corresponding to said comparison,
**in that** said measuring system (4) comprises a first code (41), positioned on said base (1), and a plurality of second codes (42_{a,b,...,k,...n}), each positioned on the respective supporting bar (21_{a,b,...,k,...n}),
**in that** said measuring system (4) comprises a plurality of sensors (43_{a,b,...,k,...n}),
**in that** on each supporting bar (21_{a,b,...,k,...n}) is installed at least one sensor (43_{a,b,...,k,...n}) which is able to measure a position value of each supporting bar (21_{a,b,...,k,...n}) with respect to said first code (41), and
on each movable element (24_{a,b,...,k,...n}) is installed at least one sensor (43_{a,b,...,k,...n}) which is able to measure a position value of each movable element (24_{a,b,...,k,...n}) with respect to a corresponding code of said plurality of second codes (42_{a,b,...,k,...n}).

2. The machining centre (C) according to the preceding claim, **characterised in that** said plurality of supporting bars (21_{a,b,...,k,...n}) and plurality of movable elements (24_{a,b,...,k,...n}) can be actuated manually by an operator, and
**in that** said plurality of supporting bars (21_{a,b,...,k,...n}) and said plurality of movable elements (24_{a,b,...,k,...n}) are configured to communicate with each other and with said logic control unit (U), by means of a wireless protocol.

3. The machining centre (C) according to any one of the preceding claims, **characterised**
**in that** on said base (1) are coupled a first (22) and a second (23) guide for the sliding of said plurality of supporting bars (21_{a,b,...,k,...n}), and
**in that** said first code (41) is of the binary type, has a longitudinal extension from a first end (41ₐ) to a second end (41_{b}) and is positioned along all or along part of said first (22) or second (23) guide.

4. The machining centre (C) according to any one of the preceding claims, **characterised in that** each code (42ₖ) of said plurality of second codes (42_{a,b,...k,...n}) has a longitudinal extension from a first end (42') to a second end (42") and is positioned along a respective supporting bar (21ₖ).

5. The machining centre (C) according to the preceding claim, **characterised**
**in that** each code (42ₖ) of said plurality of second codes (42_{a,b,...k,...n}) is identical to the other codes, and
**in that** each supporting bar (21ₖ) is equipped with a further identification code.

6. The machining centre (C) according to claim 4, **characterised in that** each code (42ₖ) of said plurality of second codes (42_{a,b,...k,...n}) is different to the other codes.

7. The machining centre (C) according to any one of the preceding claims, **characterised in that** each supporting bar (21ₖ) and each movable element (24ₖ) comprises display means for displaying said corresponding signals received from said logic control unit (U).

8. The machining centre (C) according to any one of the preceding claims, **characterised in that** it comprises a system for cleaning said first (41) and plurality (42_{a,b,...,k,...n}) of second codes.

## Patentansprüche

1. Einem Bearbeitungszentrum (C) für die Bearbeitung von Teilen aus Holz, Keramik, Kunststoff, Glas, Glasfaser, Bestehend aus:
- Eine Unterlage (1) für das genannte Bearbeitungszentrum (C) ;
- Eine Arbeitsfläche (2), verbunden mit dem Sockel (1), für die zu bearbeitenden Teile, die sich abwechselnd wie folgt zusammensetzt
- Eine Vielzahl von Stützstangen (21_{a,b,...k,...n}), verschiebbar gekoppelt und entlang der Basis beweglich (1) ;
- Eine Vielzahl beweglicher Elemente (24_{a,b,...k,...n}) zur Befestigung der zu bearbeitenden Teile, verschiebbar gekoppelt und beweglich entlang der jeweiligen Stützstangen (21_{a,b,...k,...n});
- eine Logiksteuereinheit (U) für den Betrieb des Bearbeitungszentrums (C), in dem Konfigurationen der Arbeitsfläche (2) für die Bearbeitung der Teile gespeichert sind; Das Bearbeitungszentrum (C), **dadurch gekennzeichnet, daß** es ein mit der Arbeitsfläche (2) gekoppeltes Messsystem (4) aufweist, das Positionswerte der Pluralität der Auflageleisten (21_{a,b,...k,...n}) und der Pluralität der beweglichen Elemente (24_{a,b,...k,...n}) in einer vorgegebenen Konfiguration der Arbeitsfläche (2) misst und die Positionswerte an das Logiksteuergerät (U)sendet, das Logiksteuergerät (U) vergleicht die gespeicherten Konfigurationen mit den entsprechenden Positionswerten, die entsprechende Signale empfangen und aussenden, da das Messsystem (4) einen ersten Code (41) enthält, der auf dem Sockel (1) angeordnet ist, und eine Vielzahl von zweiten Codes (42_{a,b,...k,...n}), jeweils auf der entsprechenden Stützstange (21_{a,b,...k,...n}), da das Messsystem (4) eine Vielzahl von Sensoren (43_{a,b,...k,...n}) umfasst, da auf jeder Stützstange (21_{a,b,...k,...n}) mindestens ein Sensor installiert (43_{a,b,...k,...n}) ist, der einen Positionswert jeder Auflageleiste (21_{a,b,...k,...n}) in Bezug auf den ersten Code (41)messen kann, ferner ist auf jedem beweglichen Element (24_{a,b,...k,...n}) mindestens ein Sensor installiert (43_{a,b,...k,...n}), der einen Positionswert jedes beweglichen Elements (24_{a,b,...k,...n}) in Bezug auf einen entsprechenden Code dieser Mehrzahl von zweiten Codes (42_{a,b,...k,...n}) messen kann.

2. Bearbeitungszentrum (C) nach dem vorhergehenden Anspruch, **dadurch gekennzeichnet, dass** die Pluralität der Stützstangen (21_{a,b,...k,...n}) und mehrere bewegliche Elemente (24_{a,b,...k,...n}) manuell durch einen Bediener betätigt werden können, wobei die Vielzahl der Stützstangen (21_{a,b,...k,...n}) und die Pluralität der beweglichen Elemente (24_{a,b,...k,...n}) so konfiguriert sind, dass sie über ein drahtloses Protokoll miteinander und mit dem Logiksteuergerät (U) kommunizieren. Ü

3. Bearbeitungszentrum (C) nach einem der vorhergehenden Ansprüche, **dadurch gekennzeichnet, daß** auf dem Sockel (1) eine erste (22) und eine zweite (23) Führung zum Gleiten der Pluralität der Stützstangen (21_{a,b,...k,...n}) gekoppelt sind, wobei der erste Code (41) binär ist, eine Längsausdehnung vom ersten Ende (41ₐ) zum zweiten Ende (41_{b}) aufweist und entlang des gesamten oder entlang des Teils des ersten Führungselements (22) oder des zweiten Führungselements (23) positioniert ist.

4. Bearbeitungszentrum (C) nach einem der vorhergehenden Ansprüche, **dadurch gekennzeichnet, dass** jeder Code (42k) der Pluralität der zweiten Codes (42_{a,b,...k,...n}) eine Längsausdehnung von einem ersten Ende (42') zu einem zweiten Ende (42") hat und entlang einer entsprechenden Stützstange (21ₖ) positioniert ist.

5. Das Bearbeitungszentrum (C) nach dem vorhergehenden Anspruch, **dadurch gekennzeichnet, daß** jeder Code (42ₖ) dieser Vielzahl von Zweitcodes (42) mit den anderen Codes identisch ist, und jede Stützstange (21 k)mit einem weiteren Identifizierungscode versehen ist.

6. Bearbeitungszentrum (C) nach Anspruch 4, **dadurch gekennzeichnet, dass** jeder Code (42k) der Pluralität der zweiten Codes (42_{a,b,...k,...n}) sich sich von den anderen Codes unterscheidet.

7. Bearbeitungszentrum (C) nach einem der vorhergehenden Ansprüche, **dadurch gekennzeichnet, daß** jede Auflageleiste (21ₖ) und jedes bewegliche Element (24ₖ) Anzeigeeinrichtungen zur Anzeige der entsprechenden Signale aufweist, die von der Logiksteuereinheit (U) empfangen wurden.

8. Bearbeitungszentrum (C) nach einem der vorhergehenden Ansprüche, **dadurch gekennzeichnet, daß** es ein System zur Reinigung der ersten (41) und der Pluralität (42_{a,b,...k,...n}) der zweiten Codes umfasst.

## Revendications

1. Un centre d'usinage (C) pour des pièces d'usinage faites de bois, céramique, plastique, verre, fibre de verre, comprenant:
- une base (1) pour soutenir ledit centre d'usinage (C);
- une surface de travail (2), couplée à ladite base (1), pour soutenir des pièces devant être usinées, comprenant à son tour
- une pluralité de barres de soutien (21_{a,b,...k,...n}), couplées de manière coulissante et mobile le long de ladite base (1) ;
- une pluralité d'éléments mobiles (24 _{a,b,...k,...n}) pour fixer lesdites pièces devant être usinées, couplées de manière coulissante et mobiles le long de barres de soutien respectives (21_{a,b,...k,...n});
- une unité de commande logique (U) pour le fonctionnement du centre d'usinage (C), dans lequel sont stockées des configurations de ladite surface de travail (2) pour l'usinage desdites pièces; ledit centre d'usinage (C) étant **caractérisé**
**par le fait qu'**il comprend un système de mesure (4) couplé à ladite surface de travail (2) qui est capable de mesurer les valeurs de positions de ladite pluralité de barres de soutien (21_{a,b,...k,...n}) et ladite pluralité d'éléments mobiles (24_{a,b,...k,...n}) dans une configuration prédéterminée de ladite surface de travail (2) et envoyer lesdites valeurs de position à ladite unité de contrôle logique (U),
dans ladite unité de contrôle logique (U) une comparaison est faite entre lesdites configurations stockées et lesdites valeurs de position reçoivent et émettent des signaux correspondant à ladite comparaison,
dans ledit système de mesure (4) comprend un premier code (41), positionné sur ladite base (1), et une pluralité de seconds codes (42_{a,b,...k,...n}), chaque position des barres de soutien respectives (21_{a,b,...k,...n}),
dans ledit système de mesure (4) comprend une pluralité de capteurs (43_{a,b,...k,...n}),
dans chacune des barres de soutien (21_{a,b,...k,...n}) est installé au moins un capteur (43_{a,b,...k,...n}) qui est capable de mesurer une valeur de position de chacune des barres de soutien (21_{a,b,...k,...n}) par rapport audit premier code (41), et
sur chaque élément mobile (24_{a,b,...k,...n}) est installé au moins un capteur (43_{a,b,...k,...n}) qui est capable de mesurer une position de valeur sur chaque élément mobile (24_{a,b,...k,...n}) par rapport à un code correspondant de ladite pluralité de seconds codes (42_{a,b,...k,...n}).

2. Un centre d'usinage (C) selon la revendication précédente, **caractérisé par le fait que** ladite pluralité de barres de soutien (21_{a,b,...k,...n}) et la pluralité d'éléments mobiles (24_{a,b,...k,...n}) peut être actualisée manuellement par un opérateur, et dans ladite pluralité de barres de soutien (21_{a,b,...k,...n}) et ladite pluralité d'éléments mobiles (24_{a,b,...k,...n}) est configurée pour communiquer l'un avec l'autre et avec ladite unité de contrôle logique (U), aux moyens d'un protocole sans fil.

3. Un centre d'usinage (C) selon l'une quelconque des revendications précédentes, **caractérisé par le fait que** ladite base (1) est couplée à un premier (22) et un second (23) guide pour le coulissement de ladite pluralité de barres de soutien (21_{a,b,...k,...n}), et
dans ledit premier code (41) est de type binaire, qui possède une extension longitudinale à partir d'une première extrémité (41ₐ) vers une seconde unité (41_{b}) du premier (22) ou second (23) guide.

4. Un centre d'usinage (C) selon l'une quelconque des revendications précédentes, caractérisées dans chaque code (42ₖ) de chaque pluralité de seconds codes (42_{a,b,...k,...n}) possède une extension longitudinale à partir d'une première extrémité (42') vers une seconde extrémité (42") et est positionné le long d'une barre de soutien respective (21ₖ) .

5. Un centre d'usinage (C) selon la revendication précédente, **caractérisée par**
**le fait que** chaque code (42ₖ) de chaque pluralité de seconds codes (42_{a,b,...k,...n}) est identique à d'autres codes, et
dans chaque barre de soutien (21ₖ) est équipée avec un code d'identification supplémentaire.

6. Un centre d'usinage (C) selon la revendication 4, caractérisé dans chaque code (42ₖ) de ladite pluralité de seconds codes (42_{a,b,...k,...n}) est différent d'autres codes.

7. Un centre d'usinage (C) selon l'une quelconque des revendications précédentes, caractérisées dans chacune des barres de soutien (21ₖ) et chaque élément mobile (24ₖ) comprend des moyens d'affichage pour afficher lesdits signaux correspondants reçus à partir de l'unité de contrôle logique (U).

8. Un centre d'usinage (C) selon l'une quelconque des revendications précédentes caractérisées dans le fait qu'il comprend un système pour nettoyer ladite première (41) pluralité (42_{a,b,...k,...n}) de seconds codes.
